# EUROPEAN PATENT SPECIFICATION

(11) **EP 3 802 152 B1**
(45) Date of publication and mention of the grant of the patent: **20.07.2022**
(21) Application number: 19734899.8
(22) Date of filing: 30.05.2019
(51) Int. Cl.: B60C 1/00, C08L 9/06, C08L 7/00, C08K 3/36, C08K 5/548

(54) **TYRES FOR VEHICLES AND ELASTOMERIC COMPOSITIONS FOR TYRES COMPRISING PARTICULAR SILICAS FROM RICE HUSK ASH**
REIFEN FÜR FAHRZEUGE UND ELASTOMERE ZUSAMMENSETZUNGEN FÜR REIFEN MIT BESONDEREN KIESELSÄUREN AUS REISHÜLSENASCHE
PNEUMATIQUES POUR VÉHICULES ET COMPOSITIONS ÉLASTOMÈRES POUR PNEUMATIQUES COMPRENANT DES SILICES PARTICULIÈRES PROVENANT DE CENDRES DE BALLE DE RIZ

(30) Priority: 31.05.2018 IT 201800005915
(43) Date of publication of application: 14.04.2021
(73) Proprietor: Pirelli Tyre S.p.A., 20126 Milano (IT)
(72) Inventor: CASTELLANI, Luca, 20126 Milano (IT); PARAZZOLI, Francesco, 20126 Milano (IT); ARIMONDI, Marco, 20126 Milano (IT); HANEL, Thomas, 20126 Milano (IT); ALBIZZATI, Enrico, 20126 Milano (IT)
(74) Representative: PGA S.p.A.
(86) International application number: PCT/IB2019/054482
(87) International publication number: WO 2019/229692

(56) References cited:
- EP-A1- 3 127 864
- WO-A1-2013/093752
- DE-A1-102007 024 097
- DATABASE WPI Week 200511 Thomson Scientific, London, GB; AN 2005-096811 XP002789113, & KR 2004 0079145 A (KUMHO TIRE CO INC) 14 September 2004 (2004-09-14)

## Description

### FIELD OF THE INVENTION

The present invention relates to new elastomeric compositions for tyres, comprising particular silicas obtained from rice husk ash, and the related tyres that incorporate them, particularly in the tread band.

Said compositions are characterised by good static and dynamic mechanical properties and, unexpectedly, by a better resistance to abrasion and tearing.

### PRIOR ART

In the rubber industry, and more particularly in the tyre industry, it is known to add reinforcing fillers to the elastomeric compositions in order to improve the mechanical properties thereof.

Due to its high reinforcing power, carbon black is the most commonly used filler. However, it imparts a strong hysteresis to the articles, i.e. it increases the dissipated heat under dynamic conditions. In tyres, this results in the undesired increase of the rolling resistance, and overall in higher fuel consumption, in the production of more polluting emissions and higher transport costs.

An improvement in this sense was achieved by the use of the so-called "white" reinforcing fillers, such as chalk, talc, kaolin, bentonite, titanium dioxide and especially silica, fillers which may partially or totally replace the carbon black in elastomeric compositions, in particular of the tread band, and impart a lower rolling resistance, a good grip in the wet and at the same time a sufficient reinforcement to the tyres.

These elastomeric compositions comprising silica can therefore be advantageously used in tyres subject to different performances such as HP tyres, summer tyres, all seasons or winter.

For such uses, silicas with different features are commercially available or can be prepared according to known processes.

Some conventional preparation methods use sand as starting material, solubilising the crystalline silica in the form of silicates at high temperatures and with strong bases and, finally, re-precipitating it with strong acids, as described for example in the article Silicon (2017) 9: 917-922 entitled "Preparation and Characterization of Precipitated Silica using Sodium Silicate Prepared from Saudi Arabian Desert Sand*"*

These processes preferably use sodium hydroxide for solubilisation and sulphuric acid for subsequent precipitation, with the formation of sodium sulphate, a byproduct of little commercial interest which is generally disposed of in wastewater with a non-negligible environmental impact.

On the other hand, tyre manufacturers and car manufacturers increasingly need to have more sustainable tyres, including raw materials obtained from renewable sources and, possibly, from eco-compatible processes.

Preparation methods have therefore been developed starting from rice husks, a renewable source, which operate in milder conditions, particularly at lower temperatures.

For example, the document EP1312581A2 (Goodyear) describes a process for the production of silica from rice husk ash, where, however, the precipitation step is in fact still by classical acidification with strong acids, with the disposal problems mentioned above. The description does not contain any specific characterisation of the silicas thus obtained nor particular information on the properties of the corresponding tyres, but teaches that in order to improve their dispersibility in elastomeric matrices it is preferable to pretreat them superficially with silanes.

A further improvement in terms of eco-compatibility has taken place with some preparation processes of silica from rice husk ash where precipitation has been carried out with carbon dioxide. These processes lead to the formation of more eco-compatible by-products, in particular sodium carbonate, which can be converted into sodium hydroxide and calcium carbonate, which in turn is decomposed into calcium oxide and carbon dioxide. All these by-products can be completely recycled in the process itself, advantageously avoiding any final disposal.

For example, the document WO2004073600A2 (Ind. Inst. Science) relates to a process for the preparation of silicas from rice husk ash by precipitation with carbon dioxide and their applications in the most diverse sectors such as rubbers, plastics, paints, inks, toothpastes, cosmetics, catalysts, carriers, insulators, stabilizers and desiccants.

The silicas described therein have a wide range of surface areas (from 50 to 400 m²/g) and density after compaction (tap density, from 80 to 510 g/l).

The document totally generically states that silicas with a density after compaction of more than 200-250 g/l are mainly required by the tyre industry, without providing examples of actual incorporation of any particular silica or suggesting some improved performance thereof.

Document WO2017179070A1 (Ind. Inst. Science) describes a process for the preparation of silica from rice husk ash by precipitation with carbon dioxide, improved with respect to that shown in the previous document WO2004073600A2. In general, it is stated that silica can be applied in reinforcing rubbers and plastics, in thickening coatings and paints, in printing inks, in plastics and cosmetics, as anti-blocker in plastic sheets, as a carrier for pesticides and catalysts. No specific application or any particular advantage is suggested. The silicas obtainable according to the method described therein generally have a surface area of 150 to 400 m²/g (page 14) while those exemplified are from 87 to 403 m²/g.

### SUMMARY OF THE INVENTION

The current elastomeric compositions for tyres, in particular the tread compositions, generally use conventional silicas, i.e. silicas obtained from sand by precipitation with sulphuric acid and possible pretreatment with silanizers.

The Applicant has noticed that when these conventional silicas have a high surface area, indicatively greater than 190 m²/g, they are more difficult to process and dispersible in the matrix, possibly due to the increased number of polar silanols which interact poorly with the elastomer.

A good dispersibility of the silica in the elastomeric matrix is an important requirement for obtaining compositions suitable for use in tyres. In fact, an inhomogeneous dispersion, with the formation of numerous and/or bulky aggregates, reflects negatively on the performance of the material itself, resulting for example in an excessive hysteresis or in a poor breaking behaviour. Therefore, in commercial elastomeric compositions conventional silicas are generally used characterised by a surface area of less than 190 m²/g, generally between 155 and 185 m²/g, precisely because they are more dispersible in the elastomeric matrix.

Elastomeric compositions for tyres containing such conventional low surface area silicas can be considered as a reference with regard to mechanical and dynamic properties, in particular with regard to abrasion and tear resistance.

The Applicant was able to verify that elastomeric compositions comprising eco-compatible silicas from rice husk ash, having conventional values of surface area and density after compaction, show significantly worse tear and abrasion resistances than the elastomeric compositions containing conventional silicas. However, the Applicant has surprisingly found that certain specific silicas with a greater surface area, which can be prepared from renewable sources, in particular from rice husk ash and precipitated with carbon dioxide, are not only well dispersible, even in the absence of pre-silanisation, despite the high surface area and the high content of silanols, but above all they impart to the elastomeric compositions incorporating them better resistance to abrasion and tearing, without increasing the rolling resistance or altering other important properties of the final tyres. This increased resistance of the elastomeric compositions in the abrasion and tear tests advantageously translates into a longer life of the tyres that incorporate them, in addition to the significant improvement of the eco-compatibility of the tyres themselves.

Therefore, a first aspect of the present invention is a vulcanisable elastomeric composition for tyres comprising at least:
(a) 100 phr of a diene elastomeric polymer,
(b) 1 to 150 phr of a silica having a BET surface area measured according to ISO 18852 greater than 190 m²/g, a density after compaction measured according to the method reported in the description greater than 220 g/l and a total content of water-soluble salts measured according to the method reported in the description lower than 0.5% by weight,
(c) 0 to 120 phr of a further reinforcing filler,
(d) 0.1 to 15 phr of a vulcanising agent, and
(e) 0 to 20 phr of a coupling agent.

Without wishing to be bound to any interpretative theory, the Applicant believes that in addition to the high surface area and high density after compaction, even the low content of water-soluble salts allow eco-compatible silicas to improve both the abrasion resistance and the tearing resistance of the vulcanised elastomeric composition which incorporates them.

A second aspect of the present invention relates to a tyre component for vehicle wheels comprising a vulcanisable elastomeric composition according to the first aspect or a vulcanised elastomeric composition, obtainable by vulcanisation of the vulcanisable elastomeric composition according to the first aspect.

A third aspect of the present invention relates to a tyre for vehicle wheel comprising at least one tyre component according to the second aspect.

### DETAILED DESCRIPTION OF THE INVENTION

For the purposes of the present description and of the following claims, the term "phr" (parts per hundreds of rubber) means the parts by weight of a given component of the vulcanisable elastomeric composition by 100 parts by weight of the diene elastomeric polymer.

Unless otherwise indicated, all the percentages are expressed as percentages by weight.

In the present description, the relative terms "high or greater surface area" and the like, where not otherwise specified, indicate a surface area of the silicas greater than 190 m²/g.

Similarly, the relative terms "low or lower surface area" and the like, where not otherwise specified, indicate a surface area of the silica not greater than 190 m²/g. In the present description, the rice husk ash silica is also mentioned as "eco-compatible" silica because it is prepared from a renewable source and preferably precipitated with carbon dioxide, with the formation of by-products completely recyclable in the preparation process itself.

In the present description, the term "conventional silica" means a silica prepared from sand (fossil sources) and precipitated with strong inorganic acids (such as for example sulphuric acid).

In the present description, the term "green" is used to indicate a material, a composition, a component or a tyre not yet vulcanised.

In the present description, the phrase "composition comprising at least" followed by a list of several ingredients of different categories indicates that there may also be more than one of said ingredients of each category in the mixture (for example one or more diene elastomeric polymers a), one or more silicas b), one or more reinforcing fillers c), one or more vulcanising agents d), one or more coupling agents e) etc.).

According to a first aspect, the present invention relates to a vulcanisable elastomeric composition for tyres.

The vulcanisable elastomeric composition for tyres according to the present invention is characterised by one or more of the following preferred aspects taken alone or in combination with one another.

The vulcanisable elastomeric composition for tyres according to the present invention comprises 100 phr of at least (a) one diene elastomeric polymer.

Preferably, the diene elastomeric polymer (a) which can be used in the present invention can be selected from those commonly used in sulphur-vulcanisable elastomeric compositions, which are particularly suitable for producing tyres, that is to say, from elastomeric polymers or copolymers with an unsaturated chain having a glass transition temperature (Tg) generally below 20°C, preferably in the range from 0°C to -110°C. These polymers or copolymers may be of natural origin or may be obtained by solution polymerization, emulsion polymerization or gas-phase polymerization of one or more conjugated diolefins, optionally mixed with at least one comonomer selected from monovinylarenes and/or polar comonomers in an amount not exceeding 60% by weight.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyt-1,3-butadiene and mixtures thereof.

1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4- (4-phenylbutyl)styrene, and mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile and mixtures thereof.

Preferably, the diene elastomeric polymer (a) which can be used in the present invention can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

According to a preferred embodiment, said vulcanisable elastomeric composition, preferably for tread band, comprises at least 10% by weight, preferably between 20% by weight and 100% by weight of natural rubber, with respect to the total weight of said diene elastomeric polymer (a).

The above vulcanisable elastomeric composition may possibly comprise an elastomeric polymer of one or more monoolefins with an olefinic comonomer or derivatives thereof (a'). The monoolefins can be selected from: ethylene and α-olefins generally containing from 3 to 12 carbon atoms, such as for example propylene, 1-butene, 1-pentene, 1-hexene, 1-octene and mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene and mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

A diene elastomeric polymer (a) or an elastomeric polymer (a') functionalized by reaction with suitable terminating agents or coupling agents may also be used. In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

In a preferred embodiment, the diene elastomeric polymer (a) is a functionalised diene elastomeric polymer, preferably functionalised with mercapto groups.

The present elastomeric composition may comprise one or more diene elastomeric polymers (a) as defined above in a mixture.

The present vulcanisable elastomeric composition comprises silica (b) characterised by a surface area BET measured according to ISO 18852 greater than 190 m²/g and a total content of water-soluble salts measured according to the method described in the description of less than 0.5% by weight.

Preferably, the silica (b) is characterised by a surface area BET greater than 195 m²/g, more preferably greater than 200 m²/g, even more preferably greater than 220 m²/g, 230 m²/g or 240 m²/g.

Preferably, the silica (b) is characterised by a surface area BET of less than 300 m²/g, more preferably less than 290 m²/g, even more preferably less than 280 m²/g, 270 m²/g or 260 m²/g.

Preferably, the silica (b) is characterised by a surface area BET of between 190 and 300 m²/g, more preferably between 195 and 300 m²/g, even more preferably between 220 and 280 m²/g.

In a particularly preferred embodiment, the silica (b) is characterised by a surface area BET of between 230 and 260 m²/g.

The Applicant has found that the silicas prepared from rice husk ash differ from the conventional ones due to the salt content, and in particular for a reduced sodium, sulphur and aluminium content and higher potassium content.

Preferably, the silica (b) suitable for use in the present invention is characterised by a total content of water-soluble salts of less than 0.3% by weight, more preferably less than 0.2% by weight.

Preferably, the silica (b) is characterised by a sulphur, sodium and aluminium content, each independently lower than 0.2%, more preferably lower than 0.1% by weight, measured by X-ray fluorescence, as described in the experimental part (XRF analysis).

Preferably, the silica (b) is characterised by a potassium content higher than 0.05%, more preferably higher than 0.10% by weight, measured by X-ray fluorescence, as described in the experimental part (XRF analysis).

Silica (b) is characterised by a density after compaction (tap density) greater than 220 g/l, preferably greater than 230 g/l and/or lower than 290 g/l, more preferably lower than 280 g/l.

Preferably, the silica (b) is characterised by a density after compaction of between 220 and 300 g/l, more preferably between 220 and 290 g/l, even more preferably between 230 and 280 g/l.

In a particularly preferred embodiment, the silica (b) is characterised by a density after compaction of between 240 and 280 g/l.

Preferably, the silica (b) is characterised by a specific pore volume, per unit weight of silica, evaluated in the range from 15 to 45 nm, higher than 0.95 cc/g, more preferably higher than 0.98 cc/g, even more preferably higher than 1.0 g/cc. Preferably, the silica (b) is characterised by a silanol content of at least 3.0 mmol/g and/or of not more than 4.5 mmol/g, more preferably of at least 3.5 mmol/g and/or not more than 4.1 mmol/g.

Preferably, the silica (b) is characterised by a silanol content of between 3.0 mmol/g and 4.5 mmol/g, more preferably between 3.5 mmol/g and 4.1 mmol/g.

Preferably, the silica (b) is characterised by a silica content (SiO₂) of at least 99.0%, more preferably at least 99.5% by weight.

In a preferred embodiment, the silica (b) is characterised by a surface area BET of between 220 and 280 m²/g and a salt content lower than 0.2% by weight.

In a preferred embodiment, the silica (b) is characterised by a surface area BET of between 220 and 280 m²/g and a density after compaction of between 240 and 280 g/l.

In a preferred embodiment, the silica (b) is characterised by a surface area BET of between 220 and 280 m²/g and a specific pore volume greater than 1.0 g/cc.

Preferably the silica (b) is prepared from rice husk ash, more preferably it is prepared from rice husk ash by precipitation with carbon dioxide, adapting the teachings of WO2004073600A2 or WO2017179070A1 to obtain a silica characterised by the above features.

The man skilled in the art can easily select the conditions of the preparation process, such as for example the basic quantity for solubilisation, the flow of carbon dioxide, the temperature of the medium and the mixing speed thereof, which are more suitable for providing the desired features of silica.

These features can be measured according to known methods, exemplified in the present experimental part, such as the measurement of the surface area BET, of the total salt and silanol content, of the specific pore volume and of the density after compaction.

Optionally but not necessarily, before incorporation into the elastomeric material, silica (b) can be subjected to silanisation to further improve compatibility.

The silanising agent can be selected from the silane coupling agents (e) listed below in the present description.

Preferably, the silica (b) is incorporated into the elastomeric material without being silanised. Surprisingly, silica (b), despite the large surface area BET and the high silanol content, has an excellent dispersibility, even in the absence of silanisation, as evidenced by the data reported in the present Table 9 and as corroborated by the good general performance of the elastomeric compositions.

According to the present invention, the silica (b) is incorporated into the diene elastomeric polymer together with the other components to yield the vulcanisable elastomeric composition for tyres.

Preferably, the present elastomeric composition comprises at least 5 phr, more preferably at least 10 phr, even more preferably at least 20 phr of silica (b). Preferably, the present elastomeric composition comprises 5 to 130 phr, more preferably 10 or 80 phr of silica (b).

The present elastomeric composition may comprise one or more silicas (b) as defined above in a mixture.

The vulcanisable elastomeric composition according to the present invention may further comprise (c) a further reinforcing filler.

By "further reinforcing filler" it is meant a reinforcing filler commonly used in the tyre industry, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

The vulcanisable elastomeric composition according to the present invention may not comprise a further reinforcing filler (c).

In case it comprises it, preferably the further reinforcing filler is selected from carbon black, conventional silica, silicate fibres and mixtures thereof.

The further reinforcing filler (c) may be present in the vulcanisable elastomeric composition in an amount generally ranging between 1 phr and 120 phr, preferably between 20 phr and 90 phr.

Preferably, particularly in the case of a composition for tread band, the present composition comprises at least 1 phr, more preferably at least 2 phr, more preferably at least 3 or 4 phr of carbon black, which advantageously protects the elastomer from ageing caused by the action of ultraviolet radiation.

The present elastomeric composition may comprise one or more further reinforcing fillers (c) as defined above in a mixture.

The vulcanisable elastomeric composition according to the present invention comprises at least one vulcanising agent (d).

The vulcanising agent most advantageously used is sulphur, or, alternatively, sulphur-containing molecules (sulphur donors), with accelerators, activators and/or retardants known by the man skilled in the art.

Sulphur or derivatives thereof may advantageously be selected, for example, from: (i) soluble sulphur (crystalline sulphur); (ii) insoluble sulphur (polymeric sulphur); (iii) sulphur dispersed in oil (such as 33% sulphur, known by the trade name Crystex OT33 from Eastman); (iv) sulphur donors such as, for example, caprolactam disulphide (CLD), bis[(trialkoxysilyl)propyl]polysulphides, dithiophosphates; and mixtures thereof.

The vulcanising agent (d) is present in the vulcanisable elastomeric composition of the invention in an amount generally from 0.1 to 15 phr, preferably from 0.5 to 10 phr, even more preferably from 1 to 7 phr.

The present elastomeric composition may comprise one or more vulcanising agents (d) as defined above in a mixture.

The vulcanisable elastomeric composition according to the present invention can optionally further comprise at least one silane coupling agent (e) able to interact with the silica and bind it to the diene elastomeric polymer during the vulcanisation.

Preferably, the vulcanisable elastomeric composition comprises at least one coupling agent.

Preferably, the silane coupling agent (e) that can be used in the present invention is selected from those having at least one hydrolysable silane group, which may be identified, for example, by the following general formula (I):

(R)₃Si-CₙH₂ₙ-X (I)

where the R groups, which may be the same or different, are selected from alkyl, alkoxy or aryloxy groups or from halogen atoms, provided that at least one of the R groups is an alkoxy or aryloxy group or a halogen; n is an integer of from 1 to 6, inclusive; X is a group selected from: nitrous, mercapto, amino, epoxide, vinyl, imide, chlorine,-(S)ₘCₙH₂ₙ-Si-(R)₃ and -S-COR, where m and n are integers of from 1 to 6 inclusive and the R groups are as defined above.

Among the silane coupling agents, bis(3-triethoxysilylpropyl)tetrasulphide and bis(3-triethoxysilylpropyl)disulphide are particularly preferred. Said coupling agents may be used as such or in mixture with a suitable inert filler (such as carbon black) so as to facilitate their incorporation into the vulcanisable elastomeric composition. Preferably, said silane coupling agent (e) is present in the vulcanisable elastomeric composition in an amount ranging between 0.1 phr and 20 phr, preferably between 0.5 phr and 10 phr.

The present elastomeric composition may comprise one or more coupling agents (e) as defined above in a mixture.

Preferably, the vulcanising agent (d) is used in combination with accelerators (f) and activators (g) known by the man skilled in the art.

The accelerators (f) that are commonly used may be selected from: dithiocarbamates, guanidine, thiourea, thiazoles, sulphenamides, thiurams, amines, xanthates and mixtures thereof.

Preferably, the vulcanisation accelerators are present in the vulcanisable elastomeric composition of the invention in amounts from 0.1 to 8 phr, preferably from 0.3 to 6 phr.

Activators (g) that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the vulcanisable elastomeric composition from ZnO and fatty acid, as well as Bi₂O_{3,} PbO, Pb₃O₄, PbO₂, or mixtures thereof.

Preferably, the vulcanisation activators are present in the vulcanisable elastomeric composition of the invention in amounts from 0.2 to 15 phr, preferably from 0.5 to 10 phr.

The present elastomeric composition may comprise one or more accelerants (f) and activators (g) as defined above in a mixture.

Finally, the vulcanisable elastomeric compositions described above may comprise other commonly used additives, selected on the basis of the specific application for which the composition is intended. For example, said materials may be admixed with: antioxidants, anti-ageing agents, plasticisers, adhesives, anti-ozone agents, modifying resins, or mixtures thereof.

In particular, in order to further improve the processability, said vulcanisable elastomeric composition may be admixed with at least one plasticiser generally selected from mineral oils, vegetable oils, synthetic oils, polymers with a low molecular weight and mixtures thereof, such as, for example, aromatic oil, naphthenic oil, phthalates, soybean oil and mixtures thereof. The amount of plasticiser generally ranges from 0 phr and 70 phr, preferably from 5 phr to 30 phr. As shown in the experimental part (Tables 7 and 8), the elastomeric composition for tyres according to the invention is characterised by improved resistance to abrasion and tearing.

In a preferred embodiment, for tread band, the present vulcanisable elastomeric composition for tyres comprises at least:
(a) 100 phr of a diene elastomeric polymer, preferably functionalised,
(b) 5 to 130 phr of a silica having a surface area BET measured according to ISO 18852 greater than 190 m²/g and a total content of water-soluble salts measured according to the method reported in the present description lower than 0.5% by weight,
(c) 1 to 120 phr of a further reinforcing filler,
(d) 0.1 to 15 phr of a vulcanising agent, and
(e) 0.4 to 20 phr of a coupling agent.

The elastomeric composition of the invention may be prepared by mixing together the polymeric components with the reinforcing filler and the other additives possibly present according to techniques known in the industry. The mixing can be performed, for example, using an open mixer of the "open-mill" type or an internal mixer of the type with tangential rotors (Banbury^{®}) or with interpenetrating rotors (Intermix), or in continuous mixers of the Ko-Kneader^{™} type (Buss^{®}) or of the twinscrew or multi-screw type.

A second aspect of the present invention relates to a tyre component for vehicle wheels comprising a vulcanisable elastomeric composition as described above (green component) or a vulcanised elastomeric composition, obtainable by vulcanisation thereof (vulcanised component).

The vulcanisable elastomeric compositions of the invention can be vulcanised according to known techniques, due to the presence of sulphur-based vulcanising systems commonly used for diene elastomeric polymers. For this purpose, after one or more thermomechanical treatment stages, a vulcanising agent, preferably sulphur-based, is preferably incorporated in the materials, preferably together with vulcanisation accelerants.

In the final treatment step, the temperature is generally kept below 120 °C and preferably below 100 °C, so as to prevent any undesired pre-crosslinking phenomena. Thereafter, the vulcanisable composition is incorporated in one or more components of the tyre and subjected to vulcanisation, according to known techniques.

The tyre component according to the invention is preferably selected from among the tread band, under-layer, anti-abrasive elongated element, sidewall, sidewall insert, mini-sidewall, under-liner, rubber layers, bead filler and sheet, more preferably from among the tread band, under-layer and sidewall insert, even more preferably the component is a tread band.

A third aspect of the present invention relates to a tyre for vehicle wheels comprising at least one tyre component according to the invention, preferably selected from the tread band, under-layer, anti-abrasive elongated element, sidewall, sidewall insert, mini-sidewall, under-liner, rubber layers, bead filler and sheet.

Preferably, in the tyre according to the invention at least the tread band comprises or preferably consists of the green or vulcanised elastomeric composition according to the invention.

Preferably, in the tyre according to the invention, at least the tread band and at least one component selected from under-layer, anti-abrasive elongated element, sidewall, sidewall insert, mini-sidewall, under-liner, rubber layers, bead filler and sheet comprise the elastomeric composition according to the invention.

A tyre for vehicles according to the present invention comprises at least
- a carcass structure comprising at least a carcass ply having opposite lateral edges associated to respective bead structure;
- one belt structure applied in radially outer position with respect to the carcass structure,
- one tread band applied in radially outer position with respect to said belt structure, wherein at least said tread band comprises the elastomeric composition according to the invention.

An embodiment according to the present invention relates to a tyre for high performance vehicles (HP, SUV and UHP), wherein at least one component, preferably at least the tread band, comprises the elastomeric composition according to the invention.

An embodiment according to the present invention relates to a tyre for heavy vehicles in which at least one component, preferably at least the tread band, comprises the elastomeric composition according to the invention.

The tyre according to the invention may be a tyre for two or four-wheeled vehicles. The tyre according to the invention can be for summer or winter use or for all seasons.

The tyre according to the present invention can be manufactured according to a process which comprises:
- building components of a green tyre on at least one forming drum;
- shaping, moulding and vulcanising the tyre;
wherein building at least one of the components of a green tyre comprises:
- manufacturing at least one green component comprising the vulcanisable elastomeric composition of the invention.

### BRIEF DESCRIPTION OF THE DRAWINGS

Figure 1 shows a radial half-section of a tyre for vehicle wheels, comprising a silica as defined in the first aspect of the invention preferably in the tread band.
Figure 2 is a graph showing the volumetric distribution of the pores upon varying the radius of the pores in conventional silicas (S2, S3), in a low-surface rice husk ash silica (S4) and in a silica as defined in the first aspect of the invention (S6). In the graph, the ordinate shows dV/dR (variation of the pore volume upon the variation of the radius cc/g.nm), the abscissa shows the pore radius R (nm).

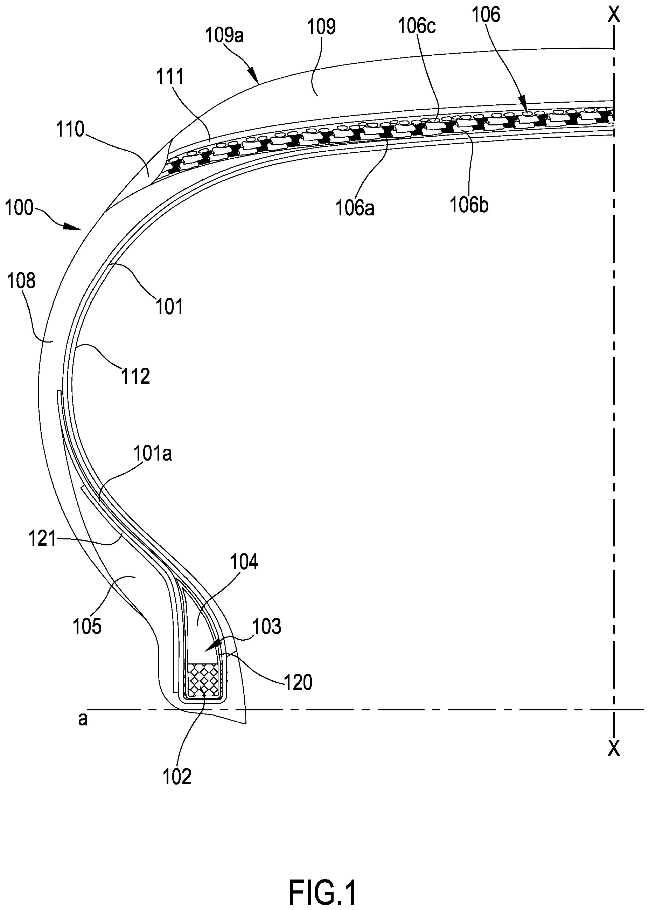

Figure 1 shows a radial half-section of a tyre for vehicle wheels according to the invention.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

Tyre 100 for four-wheeled vehicles comprises at least one carcass structure, comprising at least one carcass layer 101 having respectively opposite end flaps engaged with respective annular anchoring structures 102, referred to as bead cores, possibly associated to a bead filler 104.

The carcass layer 101 is optionally made with an elastomeric composition.

The tyre area comprising the bead core 102 and the filler 104 forms a bead structure 103 intended for anchoring the tyre onto a corresponding mounting rim, not shown. The carcass structure is usually of radial type, i.e. the reinforcing elements of the at least one carcass layer 101 lie on planes comprising the rotational axis of the tyre and substantially perpendicular to the equatorial plane of the tyre. Said reinforcing elements generally consist of textile cords, such as rayon, nylon, polyester (for example polyethylene naphthalate, PEN). Each bead structure is associated to the carcass structure by folding back of the opposite lateral edges of the at least one carcass layer 101 around the annular anchoring structure 102 so as to form the so-called carcass flaps 101a as shown in Figure 1.

In one embodiment, the coupling between the carcass structure and the bead structure can be provided by a second carcass layer (not shown in Figure 1) applied in an axially outer position with respect to the first carcass layer.

An anti-abrasive strip 105 optionally made with an elastomeric composition is arranged in an outer position of each bead structure 103.

The carcass structure is associated to a belt structure 106 comprising one or more belt layers 106a, 106b placed in radial superposition with respect to one another and with respect to the carcass layer, having typically textile and/or metallic reinforcing cords incorporated within a layer of vulcanised elastomeric material. Such reinforcing cords may have crossed orientation with respect to a direction of circumferential development of tyre 100. By "circumferential" direction it is meant a direction generally facing in the direction of rotation of the tyre.

At least one zero-degree reinforcing layer 106c, commonly known as a "0° belt", may be applied in a radially outermost position to the belt layers 106a, 106b, which generally incorporates a plurality of elongated reinforcing elements, typically metallic or textile cords, oriented in a substantially circumferential direction, thus forming an angle of a few degrees (such as an angle of between about 0° and 6°) with respect to a direction parallel to the equatorial plane of the tyre, and coated with vulcanised elastomeric material.

A tread band 109 of vulcanised elastomeric material is applied in a position radially outer to the belt structure 106.

Moreover, respective sidewalls 108 of vulcanised elastomeric material are applied in a n axially outer position on the lateral surfaces of the carcass structure, each extending from one of the lateral edges of tread 109 at the respective bead structure 103.

In a radially outer position, the tread band 109 has a rolling surface 109a intended to come in contact with the ground. Circumferential grooves, which are connected by transverse notches (not shown in Figure 1) so as to define a plurality of blocks of various shapes and sizes distributed over the rolling surface 109a, are generally made on this surface 109a, which for simplicity is represented smooth in Figure 1. An under-layer 111 of vulcanised elastomeric material can be arranged between the belt structure 106 and the tread band 109.

A strip consisting of elastomeric composition 110, commonly known as "mini-sidewall", of vulcanised elastomeric material can optionally be provided in the connecting zone between sidewalls 108 and the tread band 109, this mini-sidewall generally being obtained by co-extrusion with the tread band 109 and allowing an improvement of the mechanical interaction between the tread band 109 and sidewalls 108. Preferably, the end portion of sidewall 108 directly covers the lateral edge of the tread band 109.

In the case of tubeless tyres, a rubber layer 112, generally known as "liner", which provides the necessary impermeability to the inflation air of the tyre, can also be provided in a radially inner position with respect to the carcass layer 101.

The rigidity of the tyre sidewall 108 can be improved by providing the bead structure 103 with a reinforcing layer 120 generally known as "flipper" or additional strip-like insert.

Flipper 120 is a reinforcing layer which is wound around the respective bead core 102 and the bead filler 104 so as to at least partially surround them, said reinforcing layer being arranged between the at least one carcass layer 101 and the bead structure 103. Usually, the flipper is in contact with said at least one carcass layer 101 and said bead structure 103.

Flipper 120 typically comprises a plurality of textile cords incorporated within a layer of vulcanised elastomeric material.

The bead structure 103 of the tyre may comprise a further protective layer which is generally known by the term of "chafer" 121 or protective strip and which has the function of increasing the rigidity and integrity of the bead structure 103.

Chafer 121 usually comprises a plurality of cords incorporated within a rubber layer of vulcanised elastomeric material. Such cords are generally made of textile materials (such as aramid or rayon) or metal materials (such as steel cords).

A layer or sheet of elastomeric material can be arranged between the belt structure and the carcass structure. The layer can have a uniform thickness. Alternatively, the layer may have a variable thickness in the axial direction. For example, the layer may have a greater thickness close to its axially outer edges with respect to the central (crown) zone.

Advantageously, the layer or sheet can extend on a surface substantially corresponding to the extension surface of said belt structure.

In a preferred embodiment, a layer or sheet of elastomeric material as described above can be placed between said belt structure and said tread band, said additional layer or sheet extending preferably on a surface substantially corresponding to the extension surface of said belt structure.

The elastomeric composition according to the present invention can be advantageously incorporated in one or more of the components of the tyre selected from the belt structure, carcass structure, tread band, under-layer, sidewall, mini-sidewall, sidewall insert, bead, flipper, chafer, sheet and anti-abrasive strip, preferably incorporated at least in the tread band and/or in the under-layer. According to an embodiment not shown, the tyre may be a tyre for motorcycle wheels which is typically a tyre that has a straight section featuring a high tread curvature.

According to an embodiment not shown, the tyre may be a tyre for heavy transport vehicle wheels, such as trucks, buses, trailers, vans, and in general for vehicles in which the tyre is subjected to a high load.

Preferably, such a tyre is adapted to be mounted on wheel rims having a diameter equal to or greater than 17.5 inches for directional or trailer wheels.

The description of some preparative examples of the invention or comparative example, given only for illustrative and non-limiting purposes, is set out below.

### Characterisation of silicas

The silicas used in the comparative examples or of the invention described herein were characterised with one or more of the following analytical techniques:

### Surface area (BET)

The surface area BET (m²/g) was measured according to ISO18852 using the Micromeritics TriStar II Plus device. The sample underwent a degassing pretreatment at 170 °C for 2h under nitrogen flow.

Table 2 shows the values of the total surface area (multipoint in the range between 0.08 and 0.2 P/P₀) measured for the S1-S6 silicas used herein.

### Content of water-soluble salts

The content of water-soluble salts (weight%) of the silicas considered herein was determined according to the following internal method: a sample of silica, previously dried in an oven at 105 °C up to a constant weight of about 10 g was weighed and it was placed in a 250ml beaker with 100ml of distilled water under stirring for an hour. It was filtered with a paper filter and 50 ml of the filtrate were placed in a capsule, previously dried at constant weight. The water was evaporated in a bath with boiling water, the capsule was cooled in a dryer, the capsule was weighed and the residue of soluble salts was calculated, expressed as a percentage by weight with respect to the initial weight.

Table 2 shows the soluble salt content values of the silicas S2-S6 used herein.

### Silanol content

The silanol content (mmol/g) was calculated based on the sample water loss measured by thermogravimetry (TGA) according to the following internal method: a first heating was carried out according to a thermal ramp from 25 °C to 170 °C at 5 °C/min and one second from 170 °C to 800 °C at 10 °C/min; the silanol content was calculated by dividing the weight of the sample at the end of the second ramp by the weight of the dry sample (at the end of the first ramp or the initial weight of the sample decreased by the weight of the water lost in the heating) and finally dividing by the molecular weight of silica.

Table 2 shows the silanol content values for the silicas S2-S6 used herein.

### Density after compaction (Tap density)

The density after compaction was determined according to the following method.

A sufficient quantity of product was taken to perform two determinations. The empty measuring cylinder was weighed with the approximation of 0.1 g. 200 ± 10 ml of product were added to the cylinder so that no air pockets were formed and the cylinder containing the product was weighed with the approximation of 0.1 g. The cylinder containing the product was placed on the support, activating the Autotap Quantachrome Instruments device and performing 2500 strokes. At the end, the volume occupied by the product under test was read on the cylinder. From the final volume and sample weight values, the density after compaction was calculated.

Table 2 shows the density values after compaction for the silicas S2-S6 used herein.

### PH measurement

The pH was measured according to an internal method: an aqueous suspension of 5% silica was prepared in a 150ml beaker, shaken for 5' and the pH was measured with a calibrated electrode, at room temperature and under continuous stirring.

Table 3 shows the pH values of the aqueous suspensions of the silicas S2-S6 used herein.

### Weight loss by heating

The silica weight loss at 105 °C was determined according to the following procedure: a known quantity of silica was weighed, and the sample was then heated in an oven for 2 hours at 105 °C. After cooling in a desiccator, the sample was weighed and the difference between the initial and final weight expressed in% represents the weight loss at 105 °C.

The weight loss by calcination at 900 °C was determined by weighing 2 g of silica and calcinating the sample in a muffle at 900 °C up to constant weight. The difference between the initial weight and the weight after calcination compared to the initial one expressed in % represents the weight lost by calcination.

Table 3 shows the weight loss values % at 105 °C and at 900 °C of the samples of silica S2-S6 used herein.

### Specific volume and pore size distribution

The silica total pore volume distribution was evaluated as a function of their radius expressed in nm, through nitrogen adsorption and desorption throughout the relative pressure range, and applying the BJH calculation system, as described in the article *"*The Determination of Pore Volume and Area Distributions in Porous Substances. I. Computations from Nitrogen Isotherms", Journal of the American Chemical Society, Jan. 1951, vol. 73, p. 373-380 (Barrett, Joyner, Halenda). The analysis was carried out using the Micromeritics TriStar II Plus device.

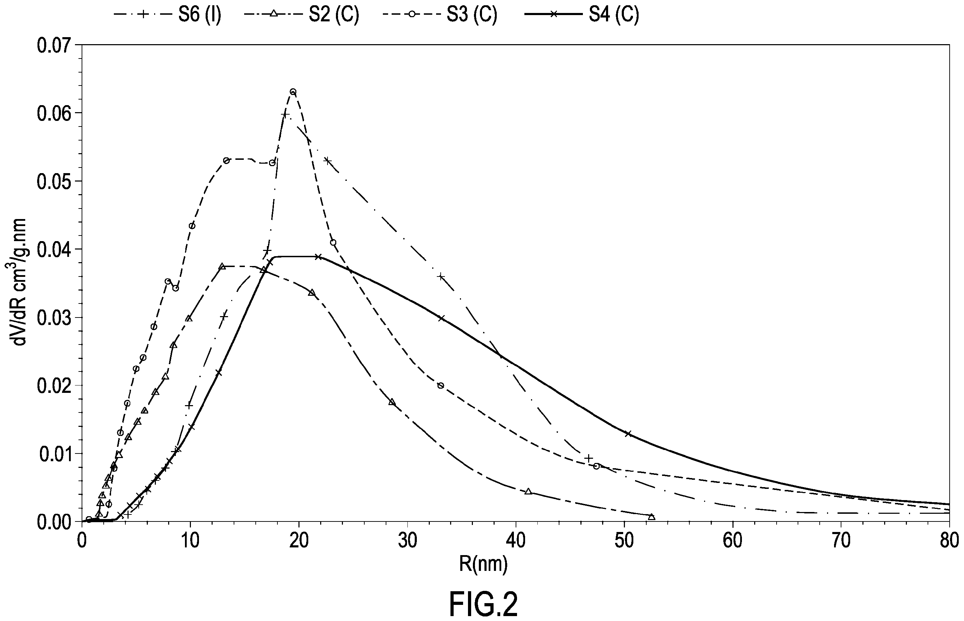

The curves shown in the graph of Figure 2, extrapolated in the desorption conditions, show that the silica S6, with the requirements for the use of the invention, in the range between 15 and 45 nm, has a distribution with a higher total pore volume compared to conventional large surface area commercial silicas (S2, S3) and to the comparative rice husk ash silica S4.

Table 3 shows the total pore volume values with radius between 15 and 45 nm for the silica samples S2, S3, S4 and S6.

### XRF analysis

The silica samples were analysed with a Bruker AXS S4 Pioneer apparatus by X-ray fluorescence with detection of the elements shown in Table 4.

### Description and characterisation of silicas

The silicas analysed and used in the present experimental part are shown in the following Table 1:

**Table 1**

| Silica | | Denom ination | Supplier | Preparation | Notes |
|---|---|---|---|---|---|
| S1 | C | Zeosil 1165MP | Solvay | Sand/Sulphuric acid | easily dispersible, in micro-beads |
| S2 | C | Ultrasil 7000GR | Evonik | Sand/Sulphuric acid | easily dispersible, in granules |
| S3 | C | Zeosil Premium 200MP | Solvay | Sand/Sulphuric acid | easily dispersible, in micro-beads |
| S4 | C | HD Silica A | Anujat Ltd | Rice husk ash/CO₂ | in microbeads |
| S5 | I | HD Silica B | Anujat Ltd | Rice husk ash/CO₂ | in microbeads |
| S6 | I | HD Silica C | Anujat Ltd | Rice husk ash/CO₂ | in microbeads |
| S7 | C | Zeosil 1115 MP | Solvay | Sand/Sulphuric acid | easily dispersible, in micro-beads |

C: comparative (conventional silica or not meeting the requirements of the silica used in the present invention);
I: invention (silica having the requirements necessary for use in the present invention).

Silicas S1-S3 and S7 are conventional commercial silicas, commonly used as reinforcing fillers in elastomeric compositions for tyres.

Silicas S4-S6 are eco-friendly silicas from rice husk ash produced by the Indian Institute of Science.

Silicas S1-S7 have the properties detailed in the following Tables 2, 3 and 4:

**Table 2**

| Silica | | Preparation | Surface area (BET) m²/g | Content water soluble salts % by weight | Content in silanols mmoles/g | Density (tap) (g/l) |
|---|---|---|---|---|---|---|
| S1 | C | Sand/H₂SO₄ | 165 | -- | -- | -- |
| S2 | C | Sand/H₂SO₄ | 173 | 0.68 | 2.5 | 315.2 |
| S3 | C | Sand/H₂SO₄ | 195 | 1.20 | 3.1 | 293.7 |
| S4 | C | Rice husk ash/CO₂ | 162 | 0.90 | 3.5 | 216.8 |
| S5 | I | Rice husk ash/CO₂ | 242 | 0.18 | 3.5 | 275.8 |
| S6 | I | Rice husk ash/CO₂ | 253 | 0.15 | 4.1 | 242.8 |
| S7 | C | Sand/H₂SO₄ | 115 | -- | -- | -- |

The conventional silicas S1, S2 and S7 have a lower BET surface area than that of the silicas used in the invention (with a surface area of at least 190 m²/g).

Silica S3 while having a BET surface area conforming to the requirements of the silicas used in the invention, has a high soluble salt content.

Silica S4, although being eco-compatible, does not have a BET surface area according to the requirements of the silicas used in the invention, i.e. it does not have a BET surface area greater than 190 m²/g, but lower (162 m²/g), in line with the area values of the commonly used commercial high-dispersibility silicas. It also has a high salt content.

The eco-compatible silicas S5 and S6 despite the high surface area and the high silanol content showed excellent dispersibility in the elastomeric matrix, as also shown by the values shown hereafter in Table 9.

**Table 3**

| Silica | | Preparation | pH (5% in water) | Weight loss% (900 °C) | Weight loss% (105°C) | Total pore volume cc/g (R*) |
|---|---|---|---|---|---|---|
| S1 | C | Sand/H₂SO₄ | -- | -- | -- | -- |
| S2 | C | Sand/H₂SO₄ | 7.0 | 7.9 | 4.4 | 0.59 |
| S3 | C | Sand/H₂SO₄ | 6.4 | 9.1 | 4.0 | 0.80 |
| S4 | C | Rice husk ash/CO₂ | 7.7 | 11.7 | 8.3 | 0.91 |
| S5 | I | Rice husk ash/CO₂ | 7.6 | 10.5 | 6.1 | -- |
| S6 | I | Rice husk ash/CO₂ | 6.4 | 7.6 | 2.7 | 1.03 |

| | | | | | | |
|---|---|---|---|---|---|---|
| * pore radius R: 15 - 45 nm | | | | | | |

The total pore volume values shown in Table 3 correspond to the area underlying the curves shown in the graph of Figure 2.

As it appears from that graph, the silica S6 has pores with a more homogeneous volume, in particular it is observed that in S6, pores with radius between 15 and 45 nm prevail while in the other silicas S2, S3 and S4 a different distribution of the dimensions of the pores is seen. The prevalence of pores with a radius from 15 to 45 nm in silica S6 could be one of the possible reasons for the unexpected improved dispersibility thereof in the elastomeric matrix.

**Table 4: XRF analysis (% by weight)**

| Silica | | Preparation | SiO₂ | Na | S | Al | K |
|---|---|---|---|---|---|---|---|
| S2 | C | Sand/H₂SO₄ | 98.9 | 0.51 | 0.21 | 0.24 | 0.01 |
| S3 | C | Sand/H₂SO₄ | 98.0 | 1.10 | 0.53 | 0.24 | -- |
| S5 | I | Rice husk ash/CO₂ | 99.5 | 0.07 | 0.06 | 0.08 | 0.19 |
| S6 | I | Rice husk ash/CO₂ | 99.7 | -- | 0.05 | 0.03 | 0.19 |

From the values shown in Table 4, it is seen that in commercial silicas precipitated with sulphuric acid (S2, S3) the content of sulphur and sodium is decidedly higher even by an order of magnitude while potassium is more abundant in eco-compatible silicas from husks precipitated with carbon dioxide (S5, S6).

### Preparation of elastomeric compositions for tread band

### (summer tyres)

The vulcanisable elastomeric compositions of the following examples were prepared according to the methods described herein. The quantities of the various components are shown in phr.

The mixing was conducted in three steps using an internal tangential rotor mixer (Pomini PL 1.6): in the first step, polymers, fillers, silane, stearic acid and TDAE oil were introduced and the mixing was continued for 2-3 minutes, up to reaching 140°C ± 5 °C, when the composition was unloaded. After 12-24 hours, in the second step, carried out using the same mixer, Zn Octoate, Zn Stearate, alpha-methylstyrene resin, paraffin wax, 6-PPD and TMQ were introduced and the mixing was continued for about 3 minutes, up to reaching 125 °C ± 5 °C, when the composition was unloaded. After 12-24 hours, in the third step, conducted using the same mixer, TBBS and Sulphur were introduced and mixing was continued for about 2 minutes, up to reaching 95°C ± 5 °C, when the composition was unloaded.

### Example 1

Conventional sand silicas (S2 and S3, comparative) and eco-compatible from rice husk ash (S6 with the requirements according to the use of the invention) were incorporated in elastomeric tread band compositions for summer tyres, according to the procedure described above.

In particular, the compositions of Ex. 1A (comparative) included only silica S2 (commercial silica Ultrasil 7000 from sand, precipitated with sulphuric acid, with high dispersibility and low surface area), the composition of Ex. 1C (comparative) only silica S3 (commercial Zeosil Premium 200MP high dispersibility silica, from sand, precipitated with sulphuric acid, surface area and high salt content) while the composition of Ex. 1B (invention) silica S2 and in its partial substitution (20 phr) silica S6 (from rice husk ash, precipitated with carbon dioxide, with a high surface area and low salt content), as shown in the following Table 5:

**Table 5: elastomeric compositions (phr)**

| Example 1 | 1A Comp. | 1B Inv. | 1C Comp. |
|---|---|---|---|
| Silica | S2 | S2 + S6 | S3 |
| S2 (Comp.) | 71 | 51 | -- |
| S3 (Comp.) | -- | -- | 71 |
| S6 (Inv.) | -- | 20 | -- |

| Other components | | | |
|---|---|---|---|
| NR | 30 | 30 | 30 |
| S-SBR SLR 4602 | 70 | 70 | 70 |
| Stearic acid | 1.7 | 1.7 | 1.7 |
| TESPT silane | 5.7 | 5.7 | 5.7 |
| Zinc stearate | 2.2 | 2.2 | 2.2 |
| Zinc octoate | 2 | 2 | 2 |
| Paraffin wax | 1.7 | 1.7 | 1.7 |
| TDAE | 8 | 8 | 8 |
| Alpha-methylstyrene resin | 5.5 | 5.5 | 5.5 |
| TMQ antioxidant | 2 | 2 | 2 |
| 6-PPD antioxidant | 3 | 3 | 3 |
| TBBS | 3 | 3 | 3 |
| Sulphur | 1.2 | 1.2 | 1.2 |

wherein
NR (natural rubber): natural rubber SIR20 (Indonesia);
S-SBR SLR 4602: styrene-butadiene rubber produced by Trinseo, synthesised in solution, comprising about 20% of styrene, functionalised with sulphur derivatives; Tg of about -25 °C;
Silane TESPT: Bis[3-(triethoxysilyl)propyl]tetrasulphide SI69 produced by Evonik Industries AG;
Zinc stearate: Struktol A 50 produced by Struktol Co;
Stearic acid: Radiacid 444 produced by Oleon NV;
Zinc octoate: Struktol ZEH 75 produced by Struktol Co;
Paraffin wax: Riowax bm-01 produced by SER S.p.A.;
TDAE: Treated Distillate Aromatic Extract, Vivatec 500 produced by Hansen & Rosenthal KG;
Alpha-methylstyrene resin: Impera 1504 produced by Eastmann Chemical Co.; TMQ: polymerised 2,2,4-trimethyl-1,2-dihydroquinoline Vulkanox HS/LG produced by Lanxess GmbH;
6-PPD: phenyl-p-phenylenediamine, Santoflex 6PPD produced by Eastman Chemical Co.;
TBBS: N-tert-butyl-2-benzothiazilsulfenamide produced by Rhein Chemie GmbH; Sulphur; Multisperse S-IS70P produced by Omya S.p.A.

### Example 2

Conventional sand silicas (S2, comparative) or from rice husk ash (S4, with low surface area, comparative, and S6, with the requirements according to the use of the invention) were incorporated in elastomeric tread band compositions for summer tyres, according to the procedure described above.

In particular, the compositions of Ex. 2A (comparative) included only silica S2 (commercial silica Ultrasil 7000 from sand, precipitated with sulphuric acid, with high dispersibility and low surface area), the composition of Ex. 2C (comparative) only silica S4 (rice husk ash silica, precipitated with carbon dioxide, with a low surface area) while the composition of Ex. 2B (invention), only silica S6 (from rice husk ash, precipitated with carbon dioxide, with a high surface area and low salt content), as shown in the following Table 6:

**Table 6: elastomeric compositions (phr)**

| Example 2 | 2A Comp. | 2B Inv. | 2C Comp. |
|---|---|---|---|
| Silica | S2 | S6 | S4 |
| S2 (Comp.) | 71 | -- | -- |
| S4 (Comp.) | -- | -- | 71 |
| S6 (Inv.) | -- | 71 | -- |

| Other components | | | |
|---|---|---|---|
| NR | 30 | 30 | 30 |
| S-SBR | 70 | 70 | 70 |
| Stearic acid | 1.7 | 1.7 | 1.7 |
| TESPT silane | 5.7 | 5.7 | 5.7 |
| Zinc stearate | 2.2 | 2.2 | 2.2 |
| Zinc octoate | 2 | 2 | 2 |
| Paraffin wax | 1.7 | 1.7 | 1.7 |
| TDAE | 8 | 8 | 8 |
| Alpha-methylstyrene resin | 5.5 | 5.5 | 5.5 |
| TMQ antioxidant | 2 | 2 | 2 |
| 6-PPD antioxidant | 3 | 3 | 3 |
| TBBS | 3 | 3 | 3 |
| Sulphur | 1.2 | 1.2 | 1.2 |

wherein
NR (natural rubber): natural rubber SIR20 (Indonesia);
S-SBR SLR 4602: styrene-butadiene rubber produced by Trinseo, synthesised in solution, comprising about 20% of styrene, functionalised with sulphur derivatives; Tg of about -25 °C;
Silane TESPT: Bis[3-(triethoxysilyl)propyl]tetrasulphide SI69 produced by Evonik Industries AG;
Zinc stearate: Struktol A 50 produced by Struktol Co.;
Stearic acid: Radiacid 444 produced by Oleon NV;
Zinc octoate: Struktol ZEH 75 produced by Struktol Co;
Paraffin wax: Riowax bm-01 produced by SER S.p.A.;
TDAE: Treated Distillate Aromatic Extract, Vivatec 500 produced by Hansen & Rosenthal KG;
Alpha-methylstyrene resin: Impera 1504 produced by Eastmann Chemical Co.; TMQ: polymerised 2,2,4-trimethyl-1,2-dihydroquinoline Vulkanox HS/LG produced by Lanxess GmbH;
6-PPD: phenyl-p-phenylenediamine, Santoflex 6PPD produced by Eastman Chemical Co.; TBBS: N-tert-butyl-2-benzothiazilsulfenamide produced by Rhein Chemie GmbH;
Sulphur Multisperse S-IS70P produced by Omya S.p.A.

### Example 3

Conventional sand silicas (S2, S3 and S7) were incorporated in the first phase of an elastomeric tread band pattern composition, according to the procedure described below.

The mixing was carried out in a single step using an internal tangential rotor mixer (Pomini PL 1.6): the polymer, filler, silane, stearic acid, TDAE oil and resin were introduced. The mixing continued for 2-3 minutes, until reaching 140°C ± 5 °C, when the composition was unloaded.

In particular, the composition 3A comprises only the silica S7 (commercial silica Zeosil 1115 MP from sand, precipitated with sulphuric acid, with high dispersibility and low surface area), the composition 3B only the silica S2 (commercial silica Ultrasil 7000 GR with high dispersibility), from sand, precipitated with sulphuric acid, with an intermediate surface area) and the composition 3C only the silica S3 (commercial Zeosil Premium 200 MP high dispersibility silica, precipitated with sulphuric acid, with high surface area), as illustrated in following Table 7:

**Table 7: elastomeric compositions (phr)**

| Example 3 | 3 A Comp. | 3 B Comp. | 3C Comp. |
|---|---|---|---|
| Silica | S7 | S2 | S3 |
| S7 | 50 | -- | -- |
| S2 | -- | 50 | -- |
| S3 | -- | -- | 50 |

| Other components | | | |
|---|---|---|---|
| S-SBR SLR 3402 | 100 | 100 | 100 |
| Stearic acid | 1.5 | 1.5 | 1.5 |
| TESPT silane | 4.00 | 4.00 | 4.00 |
| TDAE | 5 | 5 | 5 |
| Alpha-methylstyrene resin | 6 | 6 | 6 |

S-SBR SLR 3402: SBR produced by Trinseo, synthesised in solution, having about 15% styrene, functionalised and Tg of about -60 °C;
Silane TESPT: Bis[3-(triethoxysilyl)propyl]tetrasulphide SI69 produced by Evonik Industries AG;
TDAE: Treated Distillate Aromatic Extract, Vivatec 500 produced by Hansen & Rosenthal KG;
Stearic Acid Radiacid 444 produced by Oleon NV;
Impera 1504 alpha-methylstyrene resin produced by Eastmann Chemical Co.

### Characterisation of elastomeric compositions

The vulcanisable (green) elastomeric compositions of Examples 1 and 2 were subjected to the following evaluations:
Mooney viscosity ML (1 + 4) at 100 °C: it was measured according to the ISO 289-1:2005 standard.
MDR rheometric analysis (according to the ISO 6502 standard) using an Alpha Technologies type MDR2000 rheometer, the tests were carried out at 170 °C for 20 minutes at an oscillation frequency of 1.66 Hz (100 oscillations per minute) and an amplitude of oscillation of ± 0.5°, measuring the time required to reach respectively 30% (T30), 60% (T60) and 90% (T90) of the final torque value (Mf). The maximum torque value MH and the minimum torque value ML (dN.m) were also measured.

The elastomeric compositions of the Examples 1 and 2 were subjected after vulcanisation at 170 °C for 10 minutes to the following evaluations:

### Dispersion (automated image analysis)

From a vulcanised sample of the elastomeric composition two sections, each of 1 micron thickness and 2 mm x 2 mm dimensions, were obtained by cold microtomy (-70 °C). The sections were stretched on a slide and with a microscope in light transmitted at 100x, 10 images (of about 800 x 900 microns) were acquired in different points of the samples. The images are analysed to evaluate the dispersion of silica with the Image Pro Plus software by Media Cybernetic. The % of non-dispersed silica was then calculated as the sum of the light areas having dimensions greater than 7 microns compared to the introduced silica.

The number of aggregates is calculated as a count of light aggregates having dimensions greater than 7 microns.

The static mechanical properties were measured at 23 °C according to the ISO 37:2005 standard.

Tensile tests were performed on ring specimens (Ring Tensile Test 23 °C). In particular, the load was measured at different elongation levels (50%, 100% and 300%, referred to in sequence as CA05 - CA1 - CA3), the load at break CR and the elongation at break AR.

The dynamic mechanical properties were measured using an Instron dynamic device in traction-compression mode according to the following methods. A sample of each of the green elastomeric compositions of Examples 1 and 2 vulcanised at 170 °C for 10 minutes having a cylindrical shape (length = 25 mm; diameter = 14 mm), pre-load compression up to 25% of the longitudinal deformation with respect to the initial length and maintained at the predetermined temperature (equal to 10°C, 23°C or 70°C) for the whole duration of the test, was subjected to a dynamic sinusoidal strain having an amplitude of ±3.5% with respect to the length under pre-load, with a frequency of 100 Hz.

The dynamic mechanical properties are expressed in terms of dynamic elastic modulus (E') and Tan delta (dissipation factor). The Tan delta value was calculated as a ratio of the viscous modulus (E") to the elastic modulus (E').

### Abrasion resistance

The abrasion resistance of the compositions was measured according to the method of the DIN 53516 standard (loss in volume, mm³)

### Tear resistance (peel test)

The resistance to tearing was evaluated by measuring with a dynamometer the separation force between two sheets of the same composition, green-coupled and co-vulcanised at 170 °C for 10'. The samples were conditioned at 100 °C (+/- 2 °C) for at least 16 hours and were subjected to the peeling test using a Zwick Z005 dynamometer, whose clamps were applied to the free section of each sheet. A traction speed of 260 mm/min (+/- 20 mm/min) was then applied and the values of the peeling force, expressed in Newton (N), were then measured as the average value calculated for the two samples.

The samples were prepared as described herein.

The non-vulcanised elastomeric composition was calendared so as to obtain a sheet with a thickness of 3 mm (+/- 0.2 mm). From the sheet thus produced, slabs of 220 mm (+/-1.0 mm) x 220 mm (+/-1.0 mm) x 3 mm (+/- 0.2 mm) were obtained, marking the direction of the calendaring.

One surface of each slab was protected with a polyethylene sheet, while on the opposite surface was applied a reinforced polyamide rubberised fabric with a thickness of 0.88 mm (+/- 0.05 mm), orienting the threads in the calendaring direction and rolling the composite thus assembled so as to obtain a good adhesion between the fabric and the non-vulcanised elastomeric composition.

After cooling, from the composite thus obtained sheets were produced by diecutting, having dimensions equal to 110 mm (+/- 1.0 mm) x 25 mm (+/- 1.0 mm) x 3.88 mm (+/- 0.05 mm), taking care that the major axis of each sheet was oriented towards the threads of the fabric.

A first sheet constituting the first layer and made as described above was placed in a mould with the layer of polyamide towards the mould, the polyethylene film was removed, two strips of polyethylene terephthalate (Mylar^{®}) acting as side separators (0.2 mm thick) were applied laterally and a third strip of Mylar^{®} (0.045 mm thick) was applied to one end of the sheet in order to create a short free stretch not adherent to the second layer.

A second sheet constituting the second layer, composed of the same vulcanisable elastomeric composition of the first layer and from which the polyethylene film was previously removed, was then applied to the first sheet in the mould, thus obtaining a sample which was then vulcanised by heating at 170 °C, for 10 minutes, in a press. In the following Tables 8 and 9 the results of the analyses described above for the samples of the compositions according to Examples 1 and 2 are reported.

The values of the measurements of E', tan d, abrasion and tearing resistance were recalculated by setting the values obtained with the composition of Example 1A (containing conventional silica S2) taken as a reference equal to 100.

**Table 8: properties of the compositions of Example 1**

| Property | Unit of measurement | Ex. 1A | Ex. 1B | Ex. 1C |
|---|---|---|---|---|
| | | Comp. (S2) | Inv. (S2 + S6) | Comp. (S3) |
| Mooney ML(1+4) 100 °C | MU | 64.3 | 64.8 | 75.8 |
| ML | dNm | 1.93 | 1.98 | 2.79 |
| MH | dNm | 18.33 | 18.6 | 21.12 |
| T30 | min | 2.89 | 2.8 | 2.7 |
| T60 | min | 3.53 | 3.41 | 3.53 |
| T90 | min | 5.24 | 4.98 | 5.67 |
| | | | | |
| CA0.5 | MPa | 1.34 | 1.37 | 1.44 |
| CA1 | MPa | 2.36 | 2.37 | 2.43 |
| CA3 | MPa | 11.72 | 11.27 | 11.19 |
| CR | MPa | 17.02 | 16.84 | 18 |
| AR | % | 428.63 | 437.26 | 464.03 |
| | | | | |
| E' 100Hz 10°C | | 100 | 97 | 111 |
| Tan d 100Hz 10°C | | 100 | 100 | 100 |
| E' 100Hz 23°C | | 100 | 98 | 111 |
| Tan d 100Hz 23°C | | 100 | 101 | 104 |
| E' 100Hz 70°C | | 100 | 97 | 109 |
| Tan d 100Hz 70°C | | 100 | 99 | 109 |
| | | | | |
| Abrasion resistance (loss of volume) | | 100 | 101 | 114 |
| Tear resistance (medium strength) | | 100 | 111 | 122 |

As can be seen from the data reported in Table 8, the composition for the tread band of Ex. 1B which contains silica S6, with the requirements for use in the invention, has static and dynamic mechanical properties in line with the composition of Ex. 1A containing commercial silica with high dispersibility and low surface area of reference S2, with hysteresis values at 70 °C, predictive of rolling resistance, and at 10 °C, predictive instead of adherence on wet, which are comparable.

The abrasion resistance of the elastomeric composition of the invention (Ex. 1B) is comparable to that of the standard reference composition (Ex. 1A) while it is worse for the composition of Ex. 1C comprising S3 (conventional commercial large surface area silica).

The resistance to tearing (peeling) of the composition of Ex. 1B appears to have been decidedly improved with respect to the reference composition of Ex. 1A, although in it only 20 phr of the conventional silica S2 were replaced with the large surface area rice husk silica S6 according to the invention.

Finally, the composition of Ex. 1C, comprising a conventional silica with a high surface area S3 but excessive content of salts, is decidedly worsening with regard to its abrasion resistance.

From these data one can see that the eco-compatible silicas with the requisites selected here (high surface area and lower salt content) are actually able to give a better resistance to abrasion and tear to the elastomeric compositions even if used in small quantities.

**Table 9: properties of the compositions of Example 2**

| Property | Unit of measurement | Ex. 2A | Ex. 2B | Ex. 2C |
|---|---|---|---|---|
| | | Comp. (S2) | Inv. (S6) | Comp. (S4) |
| ML | dNm | 2.88 | 3.02 | 3.75 |
| MH | dNm | 18.6 | 17.52 | 25.07 |
| T30 | min | | | |
| T60 | min | 3.70 | 3.35 | 4.23 |
| T90 | min | 5.64 | 4.79 | 6.10 |
| | | | | |
| CA0.5 | MPa | 1.36 | 1.30 | 2.00 |
| CA1 | MPa | 2.37 | 2.16 | 3.72 |
| CA3 | MPa | 11.92 | 10.53 | 10.61 |
| CR | MPa | 18.75 | 17.16 | 15.71 |
| AR | % | 451.45 | 455.69 | 455.83 |
| | | | | |
| E' 100Hz 10°C | | 100 | 95 | 132 |
| Tan d 100Hz 10°C | | 100 | 102 | 88 |
| E' 100Hz 23°C | | 100 | 95 | 137 |
| Tan d 100Hz 23°C | | 100 | 102 | 94 |
| E' 100Hz 70°C | | 100 | 93 | 140 |
| Tan d 100Hz 70°C | | 100 | 99 | 103 |
| | | | | |
| Abrasion resistance (volume loss) | | 100 | 90 | 146 |
| Tear resistance (medium strength) | | 100 | 126 | 79 |
| | | | | |
| Silica not dispersed | % by weight | 0.82 | 0.78 | 11.2 |
| No. silica aggregates | -- | 60 | 85 | 654 |
| Maximum aggregate diameter | micron | 37.7 | 23.5 | 95.0 |
| Aggregate average diameter | micron | 14.4 | 12.7 | 15.6 |
| Standard deviation average aggregate diameter | micron | 6.9 | 3.9 | 9.0 |

As can be seen from the data reported in Table 9, the composition for tread band according to the invention of Ex. 2B, which contains rice husk ash silica S6 with a high surface area, has static and dynamic mechanical properties generally in line with those of the composition of Ex. 2A - comprising conventional commercial silica S2 with a smaller surface area - and of the composition of Ex. 2C - comprising rice husk ash silica S4 with a lower surface area.

However, with respect to the comparative compositions of Examples 2A and 2C, the composition of the invention of Ex. 2B surprisingly has a better resistance to abrasion and tearing and, considering the hysteresis values at 10 °C, a predictable wet grip of the tyre that is comparable if not better.

Moreover, from the data on the dispersion of the silicas in the elastomeric matrix reported above, it can be seen that the rice husk silica S6 selected herein has an excellent dispersibility, even better than that of the commercial sand silica S2 - defined as "highly dispersible", although the silica S6 has a greater surface area and a higher silanol content than S2 (253 m²/g vs 173 m²/g; 4.1 mmol/g vs 2.5 mmol/g), features considered to be detrimental to the compatibility of the silica with the little polar elastomeric matrix.

**Table 10: processability of the compositions of Example 3**

| Property | Unit of measurement | Ex. 3 A | Ex. 3 B | Ex. 3C |
|---|---|---|---|---|
| | | S7 | S2 | S3 |
| Silica surface area | m²/g | 115 | 173 | 195 |
| Mooney MS(1+4) 100 °C | MU | 75.0 | 85.1 | 111.2 |

Mooney Viscosity is a physical property normally used to describe the processability of elastomeric compositions. In the case of the conventional silicas tested herein, as can be seen from the data reported in Table 10, there is a direct correlation between the surface area of the silica and the Mooney MS viscosity values (expressed in MU-Mooney Unit): the greater the surface area, the higher (worse) the viscosity values. In particular, the elastomeric composition 3C containing the silica S3 (Zeosil Premium 200 MP, with a high surface area) shows high Mooney MS viscosity values, confirming both the difficult processability with respect to the other compositions 3A and 3B containing silicas with a smaller surface area and the increasing viscosity trend with increasing surface area.

In conclusion, the elastomeric compositions according to the invention, containing specific more eco-friendly silicas from rice husks, with a high surface area and density, allow producing tyres with general performances similar to those of conventional tyres comprising conventional commercial silicas with high dispersibility and smaller surface area, in particular tyres with comparable rolling resistance, but with longer life due to the unexpected improvement of the abrasion and tear resistance given by these silicas.

## Claims

1. A vulcanisable elastomeric composition for tyres, comprising at least:
(a) 100 phr of a diene elastomeric polymer,
(b) 1 to 150 phr of a silica having a BET surface area measured according to ISO 18852 greater than 190 m²/g, a density after compaction (tap density) measured according to the method reported in the description greater than 220 g/l and a total content of water-soluble salts measured according to the method reported in the description lower than 0.5% by weight,
(c) 0 to 120 phr of a further reinforcing filler,
(d) 0.1 to 15 phr of a vulcanising agent, and
(e) 0 to 20 phr of a coupling agent.

2. The composition as claimed in claim 1, wherein the diene elastomeric polymer
(a) is a functionalised diene elastomeric polymer, preferably functionalised with mercapto groups.

3. The composition as claimed in claim 1 or 2, wherein the silica (b) is **characterised by** a BET surface area greater than 195 m²/g, preferably greater than 200 m²/g, more preferably greater than 220 m²/g,

4. The composition as claimed in claim 3, wherein the silica (b) is **characterised by** a BET surface area lower than 300 m²/g, preferably lower than 290 m²/g, more preferably lower than 280 m²/g.

5. The composition as claimed in any one of the preceding claims, wherein the silica (b) is **characterised by** a total content of water-soluble salts measured according to the method reported in the description lower than 0.3% by weight, preferably lower than 0.2 % by weight.

6. The composition as claimed in any one of the preceding claims, wherein the silica (b) is **characterised by** a density after compaction (tap density) lower than 290 g/l.

7. The composition as claimed in any one of the preceding claims, wherein the silica (b) is **characterised by** a specific pore volume, evaluated in the range from 15 to 45 nm, according to the method reported in the description, higher than 0.95 cc/g.

8. The composition as claimed in any one of the preceding claims, wherein the silica (b) is **characterised by** a content of silanols measured according to the method reported in the description of at least 3.0 mmoles/g and not greater than 4.5 mmoles/g.

9. The composition as claimed in any one of the preceding claims, comprising from 5 to 130 phr of silica (b).

10. The composition as claimed in any one of the preceding claims, wherein the further reinforcing filler (c) is carbon black and is present in amounts of at least 2 phr.

11. A tyre component for vehicle wheels comprising a vulcanisable elastomeric composition as claimed in any one of claims 1 to 10 or a vulcanised elastomeric composition, obtainable by vulcanisation of the vulcanisable elastomeric composition according to any one of claims 1 to 10.

12. The tyre component as claimed in claim 11, wherein said tyre component is selected from tread band, under-layer, anti-abrasive elongated element, sidewall, sidewall insert, mini-sidewall, under-liner, rubber layers, bead filler and sheet.

13. The tyre component as claimed in claim 12, wherein said component is a tread band.

14. Tyre for vehicle wheels comprising at least one tyre component as claimed in any one of claims 11 to 13.

## Patentansprüche

1. Vulkanisierbare Elastomerzusammensetzung für Reifen, umfassend zumindest:
(a) 100 phr eines Dien-Elastomerpolymers,
(b) 1 bis 150 phr eines Siliciumdioxids mit einem BET-Oberflächenbereich gemessen nach ISO 18852 von mehr als 190 m²/g, einer Dichte nach Verdichtung (Stampfdichte) gemessen nach dem in der Beschreibung angeführten Verfahren von mehr als 220 g/l und einem Gesamtgehalt an wasserlöslichen Salzen gemessen nach dem in der Beschreibung angeführten Verfahren von weniger als 0,5 Gew.-%,
(c) 0 bis 120 phr eines weiteren verstärkenden Füllstoffs,
(d) 0,1 bis 15 phr eines Vulkanisationsmittels, und
(e) 0 bis 20 phr eines Haftvermittlers.

2. Zusammensetzung nach Anspruch 1, wobei das Dien-Elastomerpolymer
(a) ein funktionalisiertes Dien-Elastomerpolymer ist, das vorzugsweise mit Mercaptogruppen funktionalisiert ist.

3. Zusammensetzung nach Anspruch 1 oder 2, wobei das Siliziumdioxid (b) durch einen BET-Oberflächenbereich von mehr als 195 m²/g, vorzugsweise mehr als 200 m²/g, noch bevorzugter mehr als 220 m²/g, gekennzeichnet ist.

4. Zusammensetzung nach Anspruch 3, wobei das Siliciumdioxid (b) durch einen BET-Oberflächenbereich von weniger als 300 m²/g, vorzugsweise weniger als 290 m²/g, noch bevorzugter weniger als 280 m²/g, gekennzeichnet ist.

5. Zusammensetzung nach einem der vorhergehenden Ansprüche, wobei das Siliciumdioxid (b) durch einen Gesamtgehalt an wasserlöslichen Salzen gemessen nach dem in der Beschreibung angeführten Verfahren von weniger als 0,3 Gew.-%, vorzugsweise weniger als 0,2 Gew.-%, gekennzeichnet ist.

6. Zusammensetzung nach einem der vorhergehenden Ansprüche, wobei das Siliciumdioxid (b) durch eine Dichte nach Verdichtung (Stampfdichte) von weniger als 290 g/l gekennzeichnet ist.

7. Zusammensetzung nach einem der vorhergehenden Ansprüche, wobei das Siliciumdioxid (b) durch ein spezifisches Porenvolumen, evaluiert in dem Bereich von 15 bis 45 nm, gemäß dem in der Beschreibung angeführten Verfahren von mehr als 0,95 cc/g gekennzeichnet ist.

8. Zusammensetzung nach einem der vorhergehenden Ansprüche, wobei das Siliciumdioxid (b) durch einen Gehalt an Silanolen gemessen nach dem in der Beschreibung angeführten Verfahren von zumindest 3,0 mmol/g und nicht mehr als 4,5 mmol/g gekennzeichnet ist.

9. Zusammensetzung nach einem der vorhergehenden Ansprüche, umfassend von 5 bis 130 phr Siliciumdioxid (b).

10. Zusammensetzung nach einem der vorhergehenden Ansprüche, wobei der weitere verstärkende Füllstoff (c) Kohlenstoffruß ist und in Mengen von zumindest 2 phr vorliegt.

11. Reifenkomponente für Fahrzeugräder, umfassend eine vulkanisierbare Elastomerzusammensetzung nach einem der Ansprüche 1 bis 10 oder eine vulkanisierte Elastomerzusammensetzung, die durch Vulkanisierung der vulkanisierbaren Elastomerzusammensetzung nach einem der Ansprüche 1 bis 10 erhalten werden kann.

12. Reifenkomponente nach Anspruch 11, wobei die Reifenkomponente aus Laufflächenring, Unterlage, abriebfestem länglichem Element, Seitenwand, Seitenwandeinsatz, Miniseitenwand, Unterliner, Gummilagen, Wulstfüller und Flächenmaterial ausgewählt ist.

13. Reifenkomponente nach Anspruch 12, wobei die Komponente ein Laufflächenring ist.

14. Reifen für Fahrzeugräder, umfassend zumindest eine Reifenkomponente nach einem der Ansprüche 11 bis 13.

## Revendications

1. Composition élastomère vulcanisable pour pneus, comprenant au moins :
(a) 100 phr d'un polymère élastomère diénique,
(b) 1 à 150 phr d'une silice ayant une surface BET mesurée selon la norme ISO 18852 supérieure à 190 m²/g, une densité après compactage (densité après tassement) mesurée selon la méthode rapportée dans la description supérieure à 220 g/l et une teneur totale en sels hydrosolubles mesurée selon la méthode rapportée dans la description inférieure à 0,5% en poids,
(c) 0 à 120 phr d'une autre charge de renforcement,
(d) 0,1 à 15 phr d'un agent de vulcanisation, et
(e) 0 à 20 phr d'un agent de couplage.

2. Composition telle que revendiquée dans la revendication 1, dans laquelle le polymère élastomère diénique (a) est un polymère élastomère diénique fonctionnalisé, de préférence fonctionnalisé par des groupes mercapto.

3. Composition telle que revendiquée dans la revendication 1 ou 2, dans laquelle la silice (b) est **caractérisée par** une surface BET supérieure à 195 m²/g, de préférence supérieure à 200 m²/g, plus préférablement supérieure à 220 m²/g,

4. Composition telle que revendiquée dans la revendication 3, dans laquelle la silice (b) est **caractérisée par** une surface BET inférieure à 300 m²/g, de préférence inférieure à 290 m²/g, plus préférablement inférieure à 280 m²/g.

5. Composition telle que revendiquée dans l'une quelconque des revendications précédentes, dans laquelle la silice (b) est **caractérisée par** une teneur totale en sels hydrosolubles, mesurée selon la méthode rapportée dans la description, inférieure à 0,3% en poids, de préférence inférieure à 0,2% en poids.

6. Composition telle que revendiquée dans l'une quelconque des revendications précédentes, dans laquelle la silice (b) est **caractérisée par** une densité après compactage (densité après tassement) inférieure à 290 g/l.

7. Composition telle que revendiquée dans l'une quelconque des revendications précédentes, dans laquelle la silice (b) est **caractérisée par** un volume spécifique de pores, évalués dans la plage allant de 15 à 45 nm, selon la méthode rapportée dans la description, supérieur à 0,95 cc/g.

8. Composition telle que revendiquée dans l'une quelconque des revendications précédentes, dans laquelle la silice (b) est **caractérisée par** une teneur en silanols mesurée, selon la méthode rapportée dans la description, d'au moins 3,0 mmoles/g et non supérieure à 4,5 mmoles/g.

9. Composition telle que revendiquée dans l'une quelconque des revendications précédentes, comprenant 5 à 130 phr de silice (b).

10. Composition telle que revendiquée dans l'une quelconque des revendications précédentes, dans laquelle la charge de renforcement supplémentaire (c) est du noir de carbone et est présente en une quantité d'au moins 2 phr.

11. Composant de pneu pour roues de véhicule comprenant une composition élastomère vulcanisable telle que revendiquée dans l'une quelconque des revendications 1 à 10 ou une composition élastomère vulcanisée, pouvant d'être obtenue par vulcanisation de la composition élastomère vulcanisable selon l'une quelconque des revendications 1 à 10.

12. Composant de pneu tel que revendiqué dans la revendication 11, dans lequel ledit composant de pneu est choisi parmi une bande de roulement, une sous-couche, un élément allongé anti-abrasif, un flanc, un insert de flanc, un mini-flanc, une doublure interne, des couches de caoutchouc, un bourrage sur tringle et une feuille.

13. Composant de pneu tel que revendiqué dans la revendication 12, dans lequel ledit composant est une bande de roulement.

14. Pneu pour roues de véhicule comprenant au moins un composant de pneu tel que revendiqué dans l'une quelconque des revendications 11 à 13.
